# EUROPEAN PATENT APPLICATION

(11) **EP 3 413 297 A1**
(43) Date of publication of application: **12.12.2018**
(21) Application number: 17174603.5
(22) Date of filing: 06.06.2017
(51) Int. Cl.: G09G 3/34, G02F 1/1335, G02B 3/14

(54) **A METHOD OF CONTROLLING A BACKLIGHT UNIT AND CONTROLLER FOR A BACKLIGHT UNIT**

(71) Applicant: Vestel Elektronik Sanayi ve Ticaret A.S., 45030 Manisa (TR)
(72) Inventor: ÖZAYDIN,, Mustafa Çaglar, 45030 Manisa (TR)
(74) Representative: Flint, Adam

(57) **Abstract**

A method of controlling a backlight unit (102) of a display device (100) for local dimming is provided. The backlight unit (102) has a plurality of light sources (104) for illuminating pixels of the display device (100). The method comprises identifying light sources (104) for illuminating pixels of the display device (100) that are to be subject to local dimming, and controlling the direction of light emitted by the identified light sources so as to achieve local dimming.

## Description

### Technical Field

The present disclosure relates to a method of controlling a backlight unit of a display device for local dimming and a controller for backlight unit of a display device.

### Background

Display devices are used in a large variety of contexts for displaying various forms of content. The quality of an image displayed by a display device can depend on a large number of factors. One feature of a display device that may contribute to the quality of a displayed image is the contrast ratio of the display device. Display devices with an increased contrast ratio are able to emphasize the differences between the light and dark regions of a displayed image, making the image appear more vivid. While techniques for increasing the contrast ratio of a display device are known in the art, these techniques tend to introduce undesirable artefacts into the displayed image.

### Summary

According to a first aspect disclosed herein, there is provided a method of controlling a backlight unit of a display device for local dimming, the backlight unit comprising a plurality of light sources for illuminating pixels of the display device, the method comprising: identifying light sources for illuminating pixels of the display device that are to be subject to local dimming; and controlling the direction of light emitted by the identified light sources to achieve local dimming.

In an example, controlling the direction of light emitted by the identified light sources comprises reducing the angular distribution of light that is emitted by one or more of the identified light sources.

In an example, at least some of the plurality of light sources are associated with a respective deformable lens; and the method comprises controlling deformation of one or more of the deformable lenses in order to control the direction of light emitted by the identified light sources to achieve local dimming.

In an example, the deformable lenses comprise a liquid for refracting the light emitted by the identified light sources. In an example, the liquid comprises an electrolyte solution, and the controlling deformation of one or more of the deformable lenses comprises applying a voltage across the electrolyte solution.

In an example, the controlling comprises directing light emitted by the identified light sources away from pixels that have a lower luminance to illuminate pixels that have a higher luminance. When local dimming is not required, the light from the identified light sources may be directed back to illuminate the pixels that are normally illuminated by those light sources.

According to a second aspect disclosed herein, there is provided a controller for a backlight unit of a display device, the backlight unit comprising a plurality of light sources for illuminating the pixels of the display device, the controller being operable to: identify light sources of the backlight unit that are to be subject to local dimming; and control the direction of light emitted by the identified light sources to achieve local dimming.

In an example, the controller is operable to control the direction of light that is emitted by the identified light sources such that there is a reduction in the angular distribution of light that is emitted by one or more of the identified light sources.

There may also be provided a display device comprising: a screen, the screen comprising a plurality of pixels for generating an image; a backlight unit comprising a plurality of light sources for illuminating the pixels; and a controller for the backlight unit, the controller being operable as described above.

In an example, at least some of the plurality of light sources of the backlight unit of the display device are associated with a respective deformable lens, the deformable lenses being controllable such that the direction of light emitted by at least some of the identified light sources can be controlled by controlling deformation of the associated deformable lenses. In an example, the deformable lenses comprise a liquid for refracting the light emitted by the associated identified light sources. In an example, the liquid comprises an electrolyte solution.

In an example, each of the deformable lenses is associated with at least one respective electrode, the at least one electrode being operable to apply a voltage across the electrolyte solution so as to control the deformation of the associated deformable lens.

In an example, the plurality of light sources of the backlight unit comprise light-emitting diodes.

In an example, the controller is operable to cause the light emitted by the identified light sources to be directed away from pixels that have a lower luminance to illuminate pixels that have a higher luminance.

### Brief Description of the Drawings

To assist understanding of the present disclosure and to show how embodiments may be put into effect, reference is made by way of example to the accompanying drawings in which:
Figure 1 shows schematically examples of components of a known display device;
Figure 2 shows schematically an example of a known system for performing local dimming;
Figure 3 shows an example of an image that is output by a display device employing a known technique of local dimming;
Figure 4 shows schematically an example of a light source-lens combination with a deformable lens;
Figure 5 shows schematically an example of a display device for controlling a plurality of deformable lenses in order to achieve local dimming;
Figure 6a shows an example of an image that is output by a display device employing a known technique of local dimming; and
Figure 6b shows an example of an image that is output by a display device employing local dimming according to the present disclosure.

### Detailed Description

A display device is used to display an image, which may be a static and/or moving image. Some display devices use an arrangement of plural light sources for generating the displayed image. The light emitted by the light sources may be used directly to generate the displayed image. For example, a large billboard may use a large number of red, green and blue coloured LEDs to generate the displayed image. In other display devices, the light sources may be part of a backlight unit, and the backlight unit may be used to illuminate a number of pixels that are in front of the backlight unit. One type of display device that generates displayed images in this way is a liquid crystal display (LCD) device. (In the present disclosure, this will typically be referred to as an LCD display device, to clarify that it is the whole of the display device that is being referred to.)

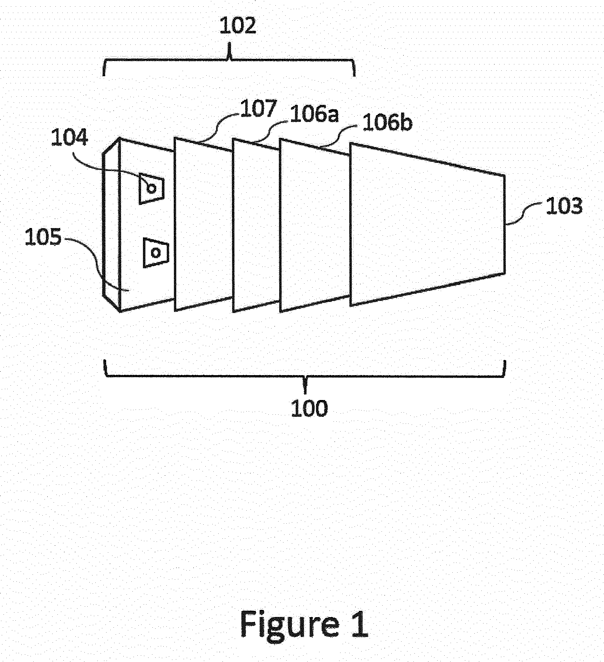

Figure 1 shows the structure of an example of an LCD display device 100. The LCD display device 100 comprises a direct type backlight unit 102 and a screen 103. As can be seen in Figure 1, the backlight unit 102 has a number of light sources 104 for illuminating the screen 103. The light sources 104 are attached to a box-like container 105 of the backlight unit 102. The box-like container 105 may be made of metal.. The interior of the box-like container 105 may be covered with a reflector (not shown) so that as much of the light emitted by the light sources 104 is directed towards the screen 103 of the display device 100. The backlight unit 102 may be attached to a diffuser plate 107. A number of optical films 106a, 106b, may also be located between the backlight unit 102 and the screen 103 of the display device 100. The diffuser plate 107 and optical films 106a, 106b act so as to spread and collimate the light emitted by the light sources 104 of the backlight unit over the screen. The light sources 104 may be for example light-emitting diodes (LEDs).

The screen of the LCD display device 100 has a number of individually controllable elements for generating an image. These individually controllable elements correspond to the pixels of the image. It is also common to refer to the individual controllable elements of an LCD display device 100 as pixels. The term "pixels" will be used herein to refer to the individually controllable elements of the LCD display device 100, unless otherwise stated. The pixels of the LCD display device 100 receive the light that is emitted by the light sources 104 of the backlight unit 102 and generate the displayed image.

In the LCD display device 100, each pixel includes a liquid crystal cell. The alignment of the liquid crystals in the liquid crystal cell is controllable such that an amount of light that is able to pass through the pixel can be controlled (i.e. the amount of light that is able to emerge from the pixel). In some examples, the pixel may comprise at least a red sub-pixel, a green sub-pixel and a blue sub-pixel, and the liquid crystal cell is used to control the amount of light that is able to pass through the sub-pixels. By controlling the amount of light that is able to pass through each of these sub-pixels, the pixel can be controlled so as to output light of a desired colour.

In the present disclosure, pixels that are being controlled so as to allow a greater amount light to pass through them (i.e. 'open' pixels) will be described as having a higher luminance. Pixels that are being controlled so as to prevent light (or prevent a greater amount of light) from passing through them will be described as having a lower luminance (i.e. 'closed' pixels). The higher luminance pixels may be thought of as target pixels in the sense that it is desirable that light from the backlight unit 102 is preferentially received at these pixels.

In known LCD display devices, the pixels are never completely opaque to the light that is received from the backlight unit 102. Even when the liquid crystals of a liquid crystal cell are aligned so as to prevent light from passing through the pixel, a residual amount of light will still be able to pass through and contribute to the image that is output for display. This causes the darker areas of the image to be appear brighter than intended, and reduces the overall contrast of the displayed image. Such an effect is said to lower the contrast ratio of the display device 100.

One technique that is known in the art for increasing the contrast ratio of an LCD display device 100 is local dimming. Local dimming involves dimming selected light sources 104 of the backlight unit 102 in order to increase the contrast of the displayed image. In direct-type backlight units, this involves dimming light sources 104 of the backlight unit 102 that are behind parts of the screen 103 that are not being used to display the image (i.e. parts of the screen that are displaying black) and that are typically close to or in the neighbourhood of pixels that are of high luminance.

In known local dimming, the light sources 104 of the backlight unit 102 are typically arranged into different sections, and information about how the image is to be displayed at the screen 103 is used to determine the intensity of light that is output by each section. Sections that are located behind open pixels (or a majority of open pixels) are controlled so as to emit light in the conventional manner. Sections that are located behind closed pixels (or a majority of closed pixels) are dimmed. Typically, this dimming is achieved through pulse-width modulation (PWM), which is used to switch the relevant light sources 104 that make up the corresponding backlight sections on and off at high frequency. In some embodiments, dimming may involve switching off the light sources 104 of a given backlight section completely.

In the present disclosure, light sources 104 may be described as being subject to local dimming. However, this does not necessarily mean that the intensity of light that is output by those light sources 104 has been dimmed. Rather, the light sources 104 may be subject to local dimming in the sense that they are identified for control, based on their location relative to the pixels of the screen 103 that are being used to display the image.

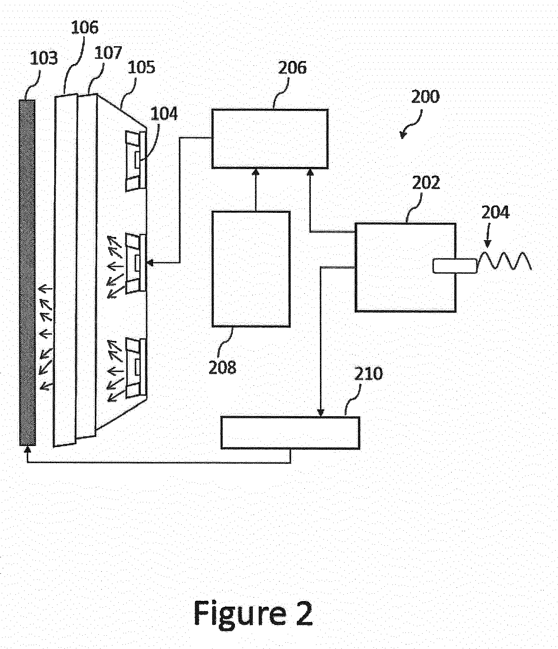

Figure 2 schematically shows an example of a known system 200 for performing local dimming in an LCD display device 100. The known system comprises a main board 202 of the display device 100 that is operable to receive an image signal 204. The main board 202 of the display device 100 is connected to a light source controller 206, a power board 208 and a timing controller board (T-con cell) 210. The light source controller 206 is responsible for controlling the intensity of light that is output by the light sources 104 of the backlight unit 102. The timing controller board 210 is responsible for controlling the individual pixels of the screen 103 so as to generate the displayed image. The power board 208 supplies power to the light source controller 206 and the light sources 104 associated therewith.

In the system shown in Figure 2, the pixel data contained in the image signal is processed by the main board 202 of the display device 100. The main board 202 determines which of the pixels of the screen 103 are to be used to display the image, and the amount of light that is to pass through them (or specifically, their respective sub-pixels). The main board 202 passes this information on to the timing controller board 210, which uses it to control the individual pixels accordingly. The main board 202 also passes this information to the light source controller 206, which uses it to identify light sources 104 that are to be subject to local dimming (as described above). The information may include the location of the pixels that make up the image, as well as any motion vectors associated therewith. The motion vector information enables the light source controller 206 to synchronize the local dimming with movement in the displayed image.

The contrast-ratio that is attainable through known techniques of local dimming is often sub-optimal. For example, undesirable artefacts, such as a flare effect, may still appear visible in the displayed image.

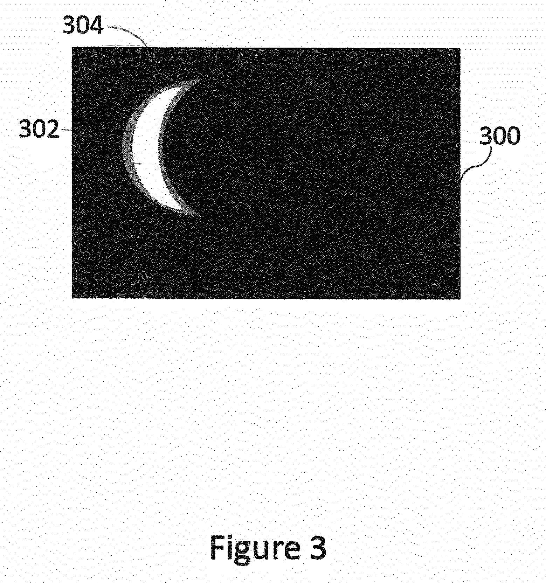

Figure 3 shows an example of an output 300 of a display device 100 that employs a known method of local dimming. As can be seen in Figure 3, the display device 100 is displaying an image 302 of the moon. However, the image 302 of the moon is surrounded by a haze-like effect 304. This haze-like area 304 does not correspond to any of the pixel data that was contained in the image signal 204, received at the display device 100. That is, the haze-like effect is an undesirable artefact that has been introduced to the displayed image. This haze-like effect 304, also referred to herein as a flare-effect, may be introduced into the displayed image in a number of different ways.

For example, in known LCD display devices 100, the light sources 104 of the backlight unit 102 are typically organised into different sections, e.g. according to light source number. The light sources 104 in a given section are collectively controlled so as to output light at the same intensity. In other words, each section is controlled as if it were, itself, a single light source. The area of the section (i.e. the number of light sources 104 associated with the section) determines the number of pixels of the screen 103 that are illuminated by that section. As the area of a section gets larger, a larger number of pixels of the screen 103 will be illuminated. However, inevitably, this results in a larger number of 'closed' pixels being illuminated by the backlight section, and therefore contributing to the image that is output for display. This contribution may appear in the displayed image in the form of a haze-like effect 304, as shown in Figure 3.

One known solution to the above-described problem is to increase the number of light sources 104 that are used in the backlight unit 102, so that a larger number of smaller area sections can be used for local dimming. In known LCD display devices, this involves increasing the number of light-emitting diode (LED) packages that are used in the backlight unit 102. For example, over 500 LED packages may be used for a given backlight unit 102. The problem with this is that the LED packages require a relatively large amount of power (e.g. up to 405 W for a typical set up) and therefore generate a great deal of heat. This means that the display device 100 needs to be fitted with additional cooling means, such as a fan. The power consumption of the LED packages, and the means required to cool the display device 100 as well as the cost of the LED packages themselves, can add significantly to the cost of manufacturing the display device 100.

Furthermore, even if greater control over the individual light sources 104 in the backlight unit 102 is achieved (e.g. by using a larger number of smaller area sections), a flare effect may still appear in the displayed image. This is because the light emitted by each individual light source 104 is distributed equally in all directions over a pre-determined angular range. Even if, for example, a light source 104 is located directly behind an open pixel, the light emitted by the light source 104 may still spread over an area that is larger than the open pixels and be received at one or more closed pixels. A residual amount of light may be output by the closed pixels and therefore contribute to the displayed image. This may be visible in the form of, for example, a haze-like effect around the displayed image.

One known solution to the problem associated with the power-requirements of the LED packages is to fit some of the light sources 104 with a respective lens, such as a polymethylmethacrylate (PMMA) lens. These lenses use total internal reflection to spread the light that is emitted by each light source 104 over a larger area. A typical system employing these lenses may consume around 170W and therefore not require additional cooling.

However, the PMMA lenses exacerbate the problem of ensuring that only the pixels that are intended to display the image are illuminated by a corresponding section of the backlight unit 102. This is because typical PMMA lenses spread the light emitted by the light source 104 over a larger area, in a relatively uncontrolled manner. Consequently, it becomes more difficult to ensure that the light from the backlight section 102 is only targeted at the pixels for displaying the image. This results in an image being displayed with the haze-like effect described previously. Furthermore, there are number of problems associated with the PMMA lenses in terms of their manufacture and light output (e.g. chromatic aberration, limited orientations etc.)

It would be desirable if local dimming could be performed in a display device 100 without needing to increase the number of light sources 104 used in the backlight unit 102 and without introducing a flare effect in the displayed image. The present disclosure provides a method for performing such local dimming, and a display device in which that method may be applied.

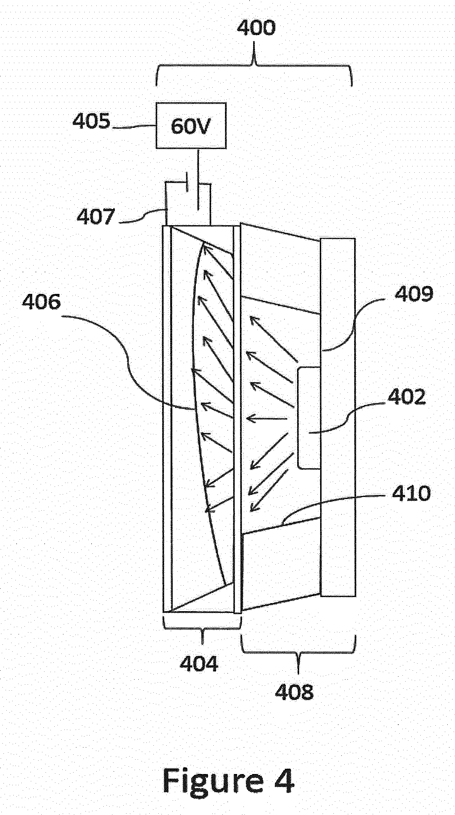

Referring now initially to Figure 4, there is shown an example of a light source-lens combination 400 for controlling a direction of light emitted by a light source 402 of a backlight unit 102, in accordance with the present disclosure. Controlling the direction of light that is output by the lens 36 may include controlling the angular distribution and/or spread of light that is output by the lens 36. The term angular distribution herein refers to an angular range in three-dimensional space over which the light emitted by the light source 402 is distributed. Generally, light that is distributed over a larger angular range is said to subtend a larger solid angle than light that is distributed over a smaller angular range.

As can be seen in Figure 4, the light source-lens combination 400 comprises a light source 402 and a lens module 404. The lens module 404 comprises a deformable lens 406. The lens 406 is controllably deformable so as to have a controllable shape. The shape of the lens 406 may be controlled so as to control a direction distribution of light that is output by the lens 406.

The light source 402 shown in Figure 4 corresponds to one of the plurality of light sources that make up the backlight unit 102 of the display device 100.

As can be seen in Figure 4, the light source 402 is held within a package 408. The package 408 comprises a base 409 to which the light source 402 is attached and a number of sides or surfaces 410 for guiding the light emitted by the light source 402 out of the package 408.

The light source 402 may comprise a light emitting diode (LED). The light source 402 may comprise a blue LED that is coated with a phosphor dye 400 so that white light is generated by the phosphor. The LED package 408 and lens module 400 may be positioned such that an air interface exists between them.

The deformable lens 406 may be associated with at least one electrode 407 for controlling the deformation of the deformable lens 406. For example, two opposing surfaces of the lens module 404 may each be associated with a respective electrode 407. The at least one electrode 407 may be separated from the deformable lens 406 by an insulating layer (not shown), such as an air gap or a hydrophobic liquid. The at least one electrode 407 is connected to a power source 405.

The shape of the deformable lens 406 may be controlled by controlling a voltage that is applied to the at least one electrode 407 so as to modify the electric field across the deformable lens 406. The relationship between the voltage that is applied to the at least one electrode 407 and the shape of the deformable lens 406 may be known in advance, and this relationship may be used to control the shape of the deformable lens 406. The shape of the lens 406 determines the manner in which light is refracted by the lens 406. Hence, by controlling the voltage that is applied to the at least one electrode 407, and therefore the shape of the lens 406, the direction of light output by the lens 406 can be controlled.

When a voltage is not being applied to the at least one electrode 407, the deformable lens 406 may revert to a rest state. The rest state may be associated with a default shape to which the deformable lens 406 always reverts when it is in the rest state. As can be seen in Figure 4, a voltage is applied to the at least one electrode 407 via a power source 405. A 60V power source 405 may be appropriate for applying the voltage to the at least one electrode 407.

In some embodiments, the deformable lens 406 may be associated with a plurality of electrodes, located at or around different portions of the lens module 404 (e.g. to the sides as well as the top and bottom of the lens 406 in the orientation shown in the Figures). For example, at least one side of the lens module 404 may be associated with a discrete array of electrodes 407. The use of multiple electrodes 407 allows for finer control over the shape of the lens 406. This is because the voltage that is applied to each electrode 407 can be individually controlled, therefore allowing different regions of the deformable lens 406 to be subject to electric fields of different strength. By controlling a voltage that is applied to each electrode 407, the shape of the deformable lens 406 can be more finely tuned, thereby allowing greater control over the direction (and therefore angular distribution and/or spread) of light that is output by the deformable lens 406.

The deformable lens 406 may comprise a liquid for refracting the light emitted by the light source 402. In alternative embodiments, the deformable lens 406 may comprise a gel. In preferred embodiments, the deformable lens 406 comprises a liquid in the form of an electrolyte solution such as potassium chloride or sodium chloride, etc..
The initial shape of the lens 406 may be such that the direction of the light emitted by the light source 402 remains relatively unchanged. When a voltage is applied to the at least one electrode 407 or an existing voltage is applied to the at least one electrode 407 is varied, the shape of the deformable lens 406 may change. As just one specific example shown in Figure 4, the shape of the deformable lens 406 may be changed such that it takes a generally semi tear-drop shape. As another example, the shape of the deformable lens 406 may be changed such that it takes a shape that is a more symmetrical convex or concave shape.

Preferably, the voltage that is applied to the at least one electrode 407 is controlled by a controller (discussed further below). The controller is able to control the voltage that is applied to the electrode(s) associated with each deformable lens 406, thereby allowing the direction of light that is output by each light source 402 to be controlled individually. The controller may be herein referred to as a lens module controller 502.

In some examples, at least one of the light sources 402 is associated with a respective deformable lens 406. In other examples, a majority of the light sources 402 are associated with a respective deformable lens 406. In yet other examples, each of the plurality of light sources is associated with a respective deformable lens 406.

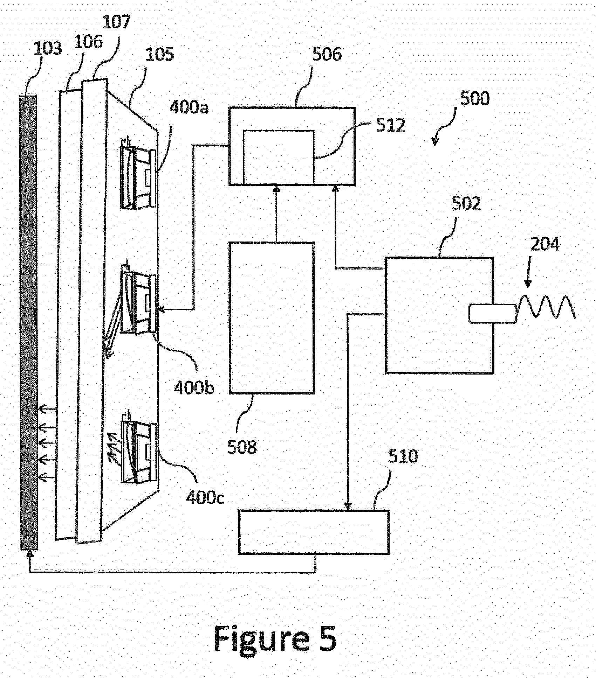

Figure 5 schematically shows an example of a display device 500 in accordance with the present disclosure. The display device 500 uses the light source-lens combinations 400 described above to achieve local dimming, that is, a combination of a light source 402 and a lens module 400 comprising a deformable lens 406. As can be seen in Figure 5, three light source-lens combinations 400a, 400b and 400c are shown as being attached to the backlight unit 102 of the display device 500. It will be appreciated that the number of light source lens combinations 400 that are used in the backlight unit 102 need not be limited to three and there will typically be a large number of light source lens combinations 400.

The display device 500 comprises a main board 502 that is electrically connected to a light source controller 506, a power board 508 and a timing controller 510. Each of these components has the same functionality as described previously in relation to the corresponding components shown in Figure 2. However, the display device 500 shown in Figure 5 also comprises a lens module controller 512.

The lens module controller 502 is used to control the direction of light that is output by the light sources 402 that are associated with deformable lenses 406. As shown in Figure 5, the lens module controller 512 may form part of the light source controller 506. The lens module controller 512 determines a voltage that is to be applied to the one or more electrodes 407 associated with the deformable lenses 406, so that the shape, and therefore direction of light that is output by the one or more deformable lenses 406 can be controlled. Each of the deformable lenses 406 may be individually controllable in the sense that each of them may be controlled so as to output light with a different direction.

As described previously, the light source controller 506 receives information about the pixels of the displayed image (e.g. location, colour, any motion associated therewith) and uses this to identify the sections of the backlight unit 102 that are to illuminate those pixels. The sections of the backlight unit 102 that do not correspond to the pixels of the image (i.e. the 'closed' or lower luminance pixels) are either switched off or dimmed. The same information about the pixels of the image may also be provided to the lens module controller 512, which uses it to determine if any of the identified light sources 402 are associated with deformable lenses 406, and/or how these deformable lenses 406 are to be controlled.

It will be appreciated that, whilst sections of the backlight unit 102 have previously been described as comprising multiple light sources 402, there may be embodiments in which each of the light sources 402 can be controlled individually (i.e. there may be one light source 402 per section, and a large number of sections). That is, the light source controller 506 may be able to identify and control individual light sources 402 in order to achieve local dimming. However, even if the light sources 402 can be controlled individually, it may still be useful to control direction of light emitted by each light source 402 (described later).

Having identified which of the light sources (or sections) 402 are to illuminate the front pixels of the display device 500, the light source controller 506 passes this information on to the lens module controller 512.

The lens module controller 512 may determine or identify which of the identified light sources 402 are associated with deformable lenses 406. For example, each of the light sources 402 in the backlight unit 102 may be associated with a light source number (identifier) and the lens module controller 512 may be pre-programmed with the identifiers of light sources that are known to be associated with the deformable lenses 406. The lens module controller 512 may compare the light source identifiers received from the light source controller 506 with the light source identifiers stored in memory, and determine whether any of the identified light sources 402 are associated with respective deformable lenses 406.

Alternatively, the light source controller 506 may provide an explicit indication of the identified light sources 402 that are associated with deformable lenses 406, and the lens module controller 512 may then determine how these deformable lenses 406 are to be controlled.

The lens module controller 512 uses the information about the pixels of the displayed image (location, colour and any motion associated therewith) to determine how the one or more deformable lenses 406 associated with the identified light sources 402 are to be controlled, particularly to achieve local dimming.

For example, if a light source 402 is identified as having a location that corresponds to one or more closed (i.e. lower luminance) pixels of the screen 103, then the associated deformable lens 406 may be controlled such that the light emitted by the light source 402 is diverted away from the pixels having a lower luminance to pixels having a higher luminance (i.e. open pixels). This situation may occur, where, for example, a section that is selected to illuminate the screen 103 comprises a plurality of light sources 402. Depending on the size of the displayed image, there may be light sources 402 within the section that illuminate pixels of the screen 103 that are intended to have a lower luminance (i.e. lower luminance pixels). The lens module controller 512 may identify which of the light sources 402 are illuminating the lower luminance pixels, and whether any of them are associated with a respective deformable lens 406. If any of the light sources 402 are associated with a deformable lens 406, the lens module controller 512 may control these deformable lenses 406 such that light is guided away from the lower luminance pixels and towards the higher luminance pixels instead. This will be particularly relevant for lower luminance pixels that are adjacent to or in the neighbourhood of higher luminance pixels in the image, as is known in local dimming per se.

The lens module controller 512 may be pre-programmed with the angular distribution of light that is emitted by each light source 402. The lens module controller 512 may also be pre-programmed with the relationship between the angular distribution of light that is output by the deformable lens 406, and the voltage that is applied to the one or more electrodes 407 associated therewith. The lens module controller 512 may determine how the direction of light that is emitted by a light source 402 is to be adjusted, and apply the corresponding voltage to the electrode(s) 407 associated with the associated deformable lens 406. As noted above, particularly to achieve local dimming, the adjustment in the direction of light is determined based on the location of the light source 402 relative to the location of the pixels that are being used to display bright portions of the image (i.e. the higher luminance pixels).

In another example, a light source 402 may be identified as having a location that corresponds to the location of pixels having a higher luminance. However, the lens module controller 512 may determine that the light emitted by the light source 402 will be spread over an area that is larger than the pixels having a higher luminance (i.e. the image pixels), and will therefore be received at neighbouring pixels that are intended to have a lower luminance. If the light source 402 is associated with a respective deformable lens 406, the lens module controller 512 may adjust the direction of light emitted by the light source such that the angular distribution of light that is emitted by the light source 402 is reduced., This will mean that a larger portion of the light is received at the higher luminance pixels. In this way, the deformable lens 406 is able to ensure that the light emitted by the identified light source 402 is more accurately targeted at the pixels that are being used to display the desired image.

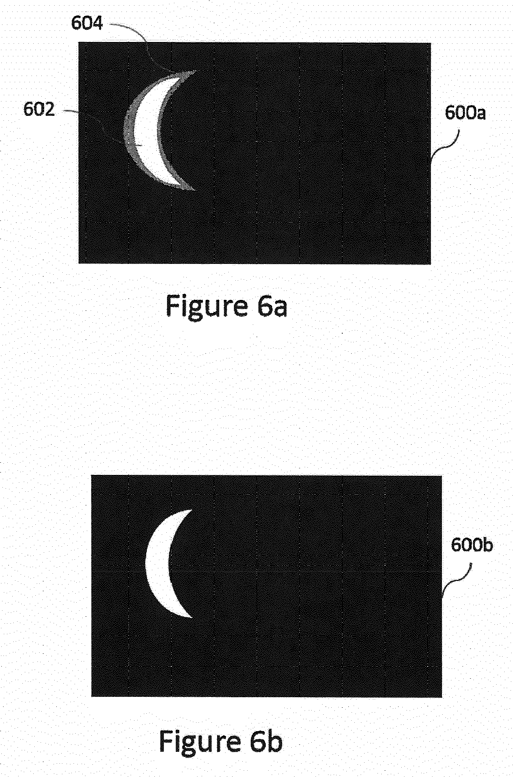

Figure 6a shows an example of an image 600a that is output by a display device that employs known local dimming techniques, such as the display device 100 shown in Figure 1. Figure 6a corresponds to Figure 3 described earlier, but is shown again for comparative purposes. As can be seen in Figure 6a, there is a flare effect 604 around the edge of the image of the moon 602. This causes the image to be displayed with a lower contrast and appear less vivid.

Figure 6b shows an example of the same image, but displayed at a display device 500 that employs local dimming according to the present disclosure, for example, a display device 500 as described above with reference to Figure 5. As can be seen in Figure 6b, there is no longer a flare or haze-like effect around the image of the moon. This is because more of the light from the backlight unit 102 has been directed to the pixels of the screen 103 that are being used to display the image; and less is being received at the pixels of the screen 103 that correspond to darker or black portions of the image. As a result, the image shown in figure 6b appears brighter, whilst the black background appears darker. Overall, this has the effect of increasing the contrast ratio of the display device 500, and producing a brighter and more vivid picture.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of controlling a backlight unit (102) of a display device (100) for local dimming, the backlight unit (102) comprising a plurality of light sources (104) for illuminating pixels of the display device (100), the method comprising:
identifying light sources (104) for illuminating pixels of the display device (100) that are to be subject to local dimming; and
controlling the direction of light emitted by the identified light sources to achieve local dimming.

2. A method according to claim 1, wherein controlling the direction of light emitted by the identified light sources comprises reducing the angular distribution of light that is emitted by one or more of the identified light sources.

3. A method according to claim 1 or claim 2, wherein at least some of the plurality of light sources (104) are associated with a respective deformable lens (406), and the method comprising controlling deformation of one or more of the deformable lenses (406) in order to control the direction of light emitted by the identified light sources to achieve local dimming.

4. A method according to claim 3, wherein the deformable lenses (406) comprise a liquid for refracting the light emitted by the identified light sources.

5. A method according to claim 4, wherein the liquid comprises an electrolyte solution, and the controlling deformation of one or more of the deformable lenses (406) comprises applying a voltage across the electrolyte solution.

6. A method according to claim 1, wherein the controlling comprises directing light emitted by the identified light sources away from pixels that have a lower luminance to illuminate pixels that have a higher luminance.

7. A controller (206) for a backlight unit of a display device (100), the backlight unit (102) comprising a plurality of light sources (104) for illuminating the pixels of the display device (100), the controller being operable to:
identify light sources (104) of the backlight unit that are to be subject to local dimming; and
control the direction of light emitted by the identified light sources to achieve local dimming.

8. A controller (206) according to claim 7, wherein the controller is operable to cause the light emitted by the identified light sources to be directed away from pixels that have a lower luminance to illuminate pixels that have a higher luminance.

9. A controller (206) according to claim 7 or claim 8, wherein the controller is operable to control the direction of light that is emitted by the identified light sources such that there is a reduction in the angular distribution of light that is emitted by one or more of the identified light sources.

10. A display device (100) comprising:
a screen, the screen (103) comprising a plurality of pixels for generating an image;
a backlight unit (102) comprising a plurality of light sources for illuminating the pixels; and
a controller (206) for the backlight unit, the controller being operable according to any of claims 7 to 9.

11. A display device (100) according to claim 10, wherein at least some of the plurality of light sources (104) are associated with a respective deformable lens (406), the deformable lenses (406) being controllable such that the direction of light emitted by at least some of the identified light sources can be controlled by controlling deformation of the associated deformable lenses (406) to achieve local dimming.

12. A display device (100) according to claim 11, wherein the deformable lenses (406) comprise a liquid for refracting the light emitted by the associated identified light sources.

13. A display device (100) according to claim 12, wherein the liquid comprises an electrolyte solution.

14. A display device (100) according to claim 13, wherein each of the deformable lenses (406) is associated with at least one respective electrode (407), the at least one electrode (407) being operable to apply a voltage across the electrolyte solution so as to control the deformation of the associated deformable lens (406).

15. A display device (100) of any of claims 11 to 14, wherein the plurality of light sources (104) of the backlight unit comprise light-emitting diodes.
